(19) Europäisches Patentamt
European Patent Office
Office européen des brevets

(11) Veröffentlichungsnummer **0 051 181**
**B1**

# (12) EUROPÄISCHE PATENTSCHRIFT

(45) Veröffentlichungstag der Patentschrift: 27.06.84

(51) Int. Cl.³: C 08 B 11/193

(21) Anmeldenummer: 81108355.9

(22) Anmeldetag: 15.10.81

## (54) Wasserlösliche Cellulosemischether mit einem Phosphonomethylsubstituenten und ein Verfahren zu ihrer Herstellung.

(30) Priorität: 23.10.80 DE 3039963

(43) Veröffentlichungstag der Anmeldung
12.05.82 Patentblatt 82/19

(45) Bekanntmachung des Hinweises auf die Patenterteilung:
27.06.84 Patentblatt 84/26

(84) Benannte Vertragsstaaten:
AT BE CH DE FR GB IT LI NL SE

(56) Entgegenhaltungen:
US - A - 2 979 374

(73) Patentinhaber: HOECHST AKTIENGESELLSCHAFT,
Postfach 80 03 20, D-6230 Frankfurt am Main 80 (DE)

(72) Erfinder: Brandt, Lothar, Dr.,
Alfred-Schumann-Strasse 23, D-6200 Wiesbaden (DE)
Erfinder: Holst, Arno, Dr., Drususstrasse 3,
D-6200 Wiesbaden (DE)

EP 0 051 181 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft wasserlösliche Cellulosemischether mit einem Phosphonomethylsubstituenten und ein Verfahren zu ihrer Herstellung in einem wäßrigen, ein organisches Lösemittel enthaltenden alkalischen Medium.

Einen anionaktiven Substituenten tragende Celluloseether werden für viele Verfahren und Anwendungsgebiete als Hilfsmittel (wie als Schutzkolloid, Flockungsmittel, Binde- und Klebemittel, Dispergierhilfsmittel, Filmbildner) und/oder wasserlöslicher Verdicker eingesetzt, dazu zählen beispielsweise die Seifen- und Waschmittelherstellung, die Papierherstellung, die Baustoffherstellung und -anwendung, die Faserverarbeitung, die Lack- und Farbenherstellung, die Herstellung von Lebens- und Genußmitteln und die Pharmazie und Kosmetik. Das bekannteste Handelsprodukt dieser Art von Celluloseether ist die Carboxymethylcellulose (CMC), die üblicherweise in der Form des Na-Salzes (NaCMC) vertrieben wird; von gewisser Bedeutung sind auch andere Carboxyalkylether oder Sulfoalkylether der Cellulose, aber auch Mischether, die neben dem anionaktiven Substituenten (in der Regel Carboxymethyl) noch andere Ethergruppen enthalten, dazu zählen beispielsweise die Methyl-carboxymethylcellulose (MCMC), die Hydroxyethyl-carboxymethylcellulose (HECMC) oder auch die Ethylhydroxyethyl-carboxymethylcellulose (EHECMC). Wenn man mehrbasische anionaktive Ethersubstituenten an das Cellulosemolekül bringen will, so bieten sich dazu insbesondere organische Phosphonsäuren oder ihre Derivate an. Die Umsetzung von Cellulose mit reaktiven, organischen Phosphonsäuren oder ihren Derivaten (z. B. Halogen-alkanphosphonsäuren) ergibt Celluloseether, die im Ethersubstituenten eine Phosphonsäuregruppe oder eine ihrer Salzformen tragen. Diese Celluloseether mit Phosphonsäuregruppen sind in der Regel wasserunslöslich, da die Reaktion mit beispielsweise Halogen-alkanphosphonsäuren zu mehr als sehr niedrigen Substitutionsgraden nicht ohne weiteres möglich ist; es sind aber auch bereits wasserlösliche Produkte bekanntgeworden:

In der US-PS 2 979 374 oder dem Aufsatz »Phosphonomethylation of Cotton« (Phosphonomethylierung von Baumwolle) von G. L. Drake, W. A. Reeves und J. D. Guthrie in Textile Research Journal, März 1959, Seiten 270 bis 275, werden chemisch modifizierte, fasrige, textile Materialien auf Cellulosebasis und ein Verfahren zu deren Herstellung beschrieben, bei denen einige der Hydroxylgruppen des Polysaccharids durch $-O-CH_2-PO_3X_2$-Gruppen ersetzt sind, wobei der Modifizierungsgrad bei 0,01 bis 4 Gew.-% liegen soll; X bedeutet in der allgemeinen Formel entweder H, ein Alkalimetall oder $NH_4$. In dem Verfahren zur Herstellung dieser Produkte wird das fasrige Ausgangsmaterial mit einer wäßrigen Lösung eines Alkalimetallsalzes der Chlormethanphosphonsäure oder einem anderen Salz dieser Säure und einem Überschuß an Alkalimetallhydroxid umgesetzt; die erhaltenen Produkte können auch noch in die freie Säureform oder in die entsprechenden Ammoniumsalze umgewandelt werden. Auch wasserlösliche Phosphonomethylether der Cellulose können hergestellt werden, wenn der Modifizierungsgrad so gewählt wird, daß 2 und mehr Gew.-% an Phosphor eingeführt werden. Als Ausgangsmaterialien werden genannt: Baumwollfasern, Cellulosehydratfasern, aminierte Baumwollfasern, carboxymethylierte Baumwollfasern, Papier und sulfoethylierte Baumwollfasern. Die Phosphonomethyl-Gruppen können entweder durch Einsatz eines Metallsalzes der Chlor-methanphosphonsäure selbst oder des Säurechlorids eingebracht werden, auch der Einsatz der entsprechenden Mono- oder Diester soll möglich sein. Die wäßrige Reaktionslösung enthält 10 bis 30 Gew.-% freies Alkalimetallhydroxid und 1 bis 30 Gew.-% an Alkalimetallsalz der Chlor-methanphosphonsäure, die Reaktion wird durch Aufnahme von 125 bis 200 Gew.-% an Reaktionslösung durch die Baumwolle bei 75 bis 115°C während 5 bis 30 min oder bei 140 bis 160°C während 2 bis 10 min durchgeführt. Die wasserlöslichen Produkte werden mit Reaktionslösungen, die 20 bis 25 Gew.-% NaOH und 10 bis 20 Gew.-% Chlor-methanphosphonsäure enthalten, bei 120 bis 150°C während 5 bis 30 min erhalten. Im einzigen Beispiel der Herstellung einer wasserlöslichen Phosphonomethylcellulose wird Baumwolle mit einer Lösung von 35,1 Gew.-Teilen Chlor-methanphosphonsäure, 96,5 Gew.-Teilen NaOH und 180 Gew.-Teilen Wasser bis zu einer Aufnahme an Lösung von 196 Gew.-% behandelt; nach dem Erhitzen auf 140°C während 30 min wird mit 20 Gew.-% Ethanol enthaltendem Wasser gewaschen; je nach Art des Ausgangsmaterials werden Phosphor-Gehalte von 2,12 oder 2,4 Gew.-% im wasserlöslichen Produkt bestimmt.

Die vernetzten Phosphonoalkylcellulosen nach der DE-OS 2 600 930 (= US-PS 4 020 271) bestehen aus solchen Grundkörpern, die ohne Vernetzung an sich wasserlöslich wären, aber durch die Vernetzung mit Formaldehyd, Epichlorhydrin, Dichloressigsäure, Diepoxiden oder anderen bekannten bifunktionellen Komponenten im wesentlichen wasserunlöslich gemacht werden. Zur Durchführung der Veretherungsstufe wird auf die vorher erwähnte US-PS 2 979 374 verwiesen.

Aus der DE-OS 1 493 227 (= US-PS 3 388 118) ist ein Verfahren zur Herstellung modifizierter Polysaccharide bekannt, bei dem zunächst Chloracetamidomethylcellulose oder eine ähnliche Verbindung mit aktivem Halogen hergestellt, und diese Zwischenverbindung dann mit Trialkylphosphiten umgesetzt wird. Die erhaltenen Produkte sind keine Celluloseether, sie enthalten Stickstoff und Phosphor im Substituenten; die erste Reaktionsstufe wird in wäßriger Lösung von z. B. N-Methylol-chloracetamid, die zweite Reaktionsstufe in einer Lösung des Phosphits in Dimethylformamid (DMF) ausgeführt. Die Reaktionsprodukte sind wasserunlöslich.

Die Verfahren zur Herstellung von Ionenaustauschern gemäß der DE-AS 2 005 407 (= US-PS 3 634 394) oder der DE-AS 2 005 408 (= US-PS 3 652 540) können auch zu solchen Produkten führen, die

einen Phosphonomethylrest tragen; dazu werden beispielsweise Perlen aus regenerierter Cellulose in Toluol in Anwesenheit von Benzethoniumchlorid

$$[CH_3-C(CH_3)_2-CH_2-C(CH_3)_2-C_6H_4-(O-CH_2-CH_2)_2-N^{\oplus}(CH_3)_2-CH_2-C_6H_5, Cl^{\ominus}]$$

mit einer NaOH, $NaBH_4$, Wasser und Chlor-methanphosphonsäure enthaltenden Lösung während 16 h bei 90° C umgesetzt, das erhaltene Produkt ist wasserunlöslich.

Bei dem bekannten Verfahren zur Herstellung von wasserlöslichen Phosphonomethylethern der Cellulose (PMC) müssen Temperaturen von mehr als 100° C angewandt werden, um die im Vergleich zu anderen Veretherungsreagentien (z. B. Monochloressigsäure) reaktionsträgere Halogenmethanphosphonsäure bzw. eines ihrer Salze zu aktivieren. In dem Reaktionsmedium anwesendes Wasser wird während der Reaktion weitgehend verdampft, so daß die Veretherungsreaktion im fast-trockenen Gemisch stattfindet. Erfahrungsgemäß werden bei derartigen »Trocken«-Verfahren, bei denen die Quellung der Alkalicellulose verhältnismäßig gering ist, meist eher ungleichmäßig veretherte Produkte mit hohen Anteilen an unsubstituierten Kettenteilen erhalten; dies gilt insbesondere bei — wie im vorliegenden Fall — niedrigsubstituierten Produkten (z. B. bei einem DS von weniger als 0,4). Im Fall der geplanten Herstellung wasserlöslicher Celluloseether führt dies auch bei an sich zur Wasserlöslichkeit ausreichenden Substitutionsgraden zu Produkten, die trübe, faserhaltige Lösungen mit Rückständen ergeben, so daß sie für viele Anwendungsgebiete nicht geeignet sind. Die hohen Temperaturen wirken sich ebenfalls ungünstig auf die Stabilität der Polymerkette aus, da ein oxidativer Kettenabbau eintreten kann, so daß die so hergestellten Celluloseether in Lösung nur niedrige Viskositäten erzeugen und damit beispielsweise als Verdicker wenig wirksam sind.

Die anderen bekannten Verfahren führen nicht zu wasserlöslichen Phosphonomethylcellulosen bzw. nicht zu Ethergruppierungen und werden entweder ebenfalls bei einer über 100° C liegenden Temperatur und unter Zuhilfenahme einer »Kuppelkomponente« oder bei einer zwar unter 100° C liegenden Temperatur durchgeführt, aber unter Zufügung mehrerer Hilfsstoffe und mit langen Reaktionszeiten.

In der weiter oben ausführlich beschriebenen US-PS 2 979 374 werden als Ausgangsmaterialien zur Phosphonomethylierungsreaktion zwar auch aminierte, sulfoethylierte oder carboxymethylierte Baumwollfasern genannt, das einzige konkrete Beispiel (Beispiel 5) nennt jedoch lediglich eine aminierte Baumwolle mit einem Stickstoffgehalt von 0,7% und das Reaktionsprodukt ist mit einem $DS_{PM}$ von etwa 0,1 noch eindeutig wasserunlöslich, so daß dieser US-PS keine ausreichenden Angaben zur Charakterisierung eines wasserlöslichen Cellulosemischethers mit einem Phosphonomethylsubstituenten und mindestens einem anderen Substituenten zu entnehmen sind.

Eine Aufgabe der vorliegenden Erfindung ist es deshalb, neue rückstandsarm wasserlösliche Cellulosemischether vorzuschlagen, in denen eine der Substituentenarten eine Phosphonomethylgruppe ist; dabei soll als Ausgangsmaterial keine textile Form der Baumwolle eingesetzt werden. Eine weitere Aufgabe der Erfindung ist es, ein Verfahren zur Herstellung dieser Produkte vorzuschlagen, das bei verhältnismäßig niedriger Temperatur und ohne nennenswerten Kettenabbau durchgeführt werden kann.

Eine Lösung der Aufgabe sind dann wasserlösliche Cellulosemischether mit

a) mindestens einem Substituenten aus der Gruppe Alkyl- Hydroxyalkyl, Carboxylalkyl, Sulfoalkyl und Dialkylaminoalkyl eines molaren Substitutionsgrads des Hydroxyalkyls ($MS_{HAlk}$) von 0,5 bis 6,0 und/oder eines Substitutionsgrads des oder der übrige(n) a)-Substituenten (DS) von 0,05 bis 2,95 und
b) einem Phosphonomethyl-Substituenten eines Substitutionsgrads ($DS_{PM}$) von 0,005 bis 0,8.

Insbesondere weisen diese Cellulosemischether unter a) einen Methyl-, Ethyl-, Hydroxyethyl-, Hydroxypropyl- und/oder Carboxymethyl-Substituenten auf. Bevorzugt sind unter diesen Cellulosemischethern solche, die

a) einen Hydroxyethyl-Substituenten mit einem $MS_{HE}$ von 0,8 bis 5,0 oder einen Carboxymethyl-Substituenten mit einem $DS_{CM}$ von 0,2 bis 1,5 und
b) einen Phosphonomethyl-Substituenten mit einem $DS_{PM}$ von 0,01 bis 0,6

haben.

Der Begriff »wasserlöslich« soll bedeuten, daß die erfindungsgemäßen Cellulosemischether nicht mehr als 10 Gew.-%, insbesondere nicht mehr als 5 Gew.-% wasserunlösliche Anteile aufweisen; diese wasserunlöslichen Anteile können beispielsweise aus unveretherter Cellulose und/oder zu niedrig oder zu hoch substituierten Celluloseetheranteilen bestehen. Unter den weiteren charakterisierenden Parametern ist folgendes zu verstehen. Der »DS« ist der Substitutionsgrad, d. h. die mittlere Anzahl von substituierten OH-Gruppen pro Anhydro-D-glucose-Einheit; er liegt bei Cellulose im Bereich von 0,0 bis 3,0. Der »MS« ist der molare Substitutionsgrad, d. h. die mittlere Anzahl von Molen des substituierenden Reagens, die pro Mol Anhydro-D-glucose-Einheit etherartig gebunden wurden;

er kann bei Cellulose auch größer als 3,0 sein; er wird normalerweise anstelle des DS zur Charakterisierung solcher Substituenten am Celluloseether verwendet, die durch Mehrfachsubstitution an einer OH-Gruppe entstehen können, d. h. im vorliegenden Fall beim Hydroxyalkylsubstituenten, weil die entstehenden OH-Gruppen der Hydroxylalkylgruppen ebenfalls — wie die OH-Gruppen der Cellulose selbst — substituierbar sind. »$MS_{HAlk}$« bedeutet dann den MS bezogen auf den Hydroxyalkylsubstituenten, »$DS_{PM}$« den DS bezogen auf den Phosphonomethylsubstituenten, »$MS_{HE}$« den MS bezogen auf den Hydroxyethylsubstituenten und »$DS_{CM}$« den DS bezogen auf den Carboxymethylsubstituenten. Bei den oben aufgeführten Substituenten sollen die Begriffe folgende bevorzugte Bedeutung haben: »Alkyl« umfaßt Methyl und Ethyl, »Hydroxyalkyl« umfaßt Hydroxyethyl bis Hydroxybutyl, »Carboxyalkyl« umfaßt Carboxymethyl und Carboxyethyl, »Sulfoalkyl« umfaßt Sulfomethyl bis Sulfopropyl und »Dialkylaminoalkyl« umfaßt bevorzugt N,N-disubstituierte Aminoethylgruppen mit N-Alkylgruppen von $C_1$ bis $C_5$ (gleich oder verschieden), wobei aber die Bezeichnung »Dialkylamino« auch N-terminale heterocyclische Reste einschließt.

Zu den erfindungsgemäßen wasserlöslichen Cellulosemischethern gehören dann beispielsweise die folgenden:

Hydroxyethyl-phosphonomethylcellulose (HEPMC),
Methyl-phosphonomethylcellulose (MPMC),
Carboxymethyl-phosphonomethylcellulose (CMPMC),
Sulfoethyl-phosphonomethylcellulose (SEPMC),
Diethylaminoethyl-phosphonomethylcellulose (DEAEPMC),
Hydroxypropyl-phosphonomethylcellulose (HPPMC),
Hydroxyethyl-hydroxypropyl-phosphonomethylcellulose (HEHPPMC),
Methyl-hydroxyethyl-phosphonomethylcellulose (MHEPMC),
Ethyl-hydroxypropyl-phosphonomethylcellulose (EHPPMC) oder
Hydroxyethyl-carboxymethyl-phosphonomethylcellulose (HECMPMC).

Eine weitere Lösung der eingangs gestellten Aufgabe ist ein Verfahren zur Herstellung der erfindungsgemäßen wasserlöslichen Cellulosemischether, das dadurch gekennzeichnet ist, daß man pro Mol Cellulose

0,1 bis 25 Mol des oder der Veretherungsmittel zur Erzeugung der Substituenten unter a),
0,05 bis 2,0 Mol Halogen-methanphosphonat-Ionen als Veretherungsmittel zur Erzeugung des Substituenten unter b), und
0,8 bis 12,0 Mol Hydroxid-Ionen

zur Reaktion bringt, wobei je nach Art des Veretherungsmittels zur Erzeugung des Substituenten unter a) bis zu 30 Gew.-Teile, pro Gew.-Teil Cellulose, eines Gemisches aus einem inerten, bevorzugt mit $H_2O$ mischbaren organischen Lösemittel und $H_2O$, bei einem Wasseranteil von 3 bis 40 Gew.-%, zugegen sind.

In einer bevorzugten Ausführungsform wird so verfahren, daß man pro Mol Cellulose 0,3 bis 8 Mol des oder der Veretherungsmittel zur Erzeugung der Substituenten unter a), 0,1 bis 1,0 Mol Halogenmethanphosphonat-Ionen als Veretherungsmittel zur Erzeugung des Substituenten unter b), und 1,0 bis 6,0 Mol Hydroxid-Ionen in 5 bis 15 Gew.-Teilen, pro Gew.-Teil Cellulose, eines Gemisches aus einem inerten, bevorzugt mit $H_2O$ mischbaren organischen Lösemittel und $H_2O$, wobei der Wasseranteil 10 bis 30 Gew.-% beträgt, zur Reaktion bringt.

Ein Verfahren zur Herstellung von wasserlöslichen Phosphonomethylcellulosen ohne zusätzliche Substituenten wird in der gleichzeitig mit dieser eingereichten Patentanmeldung EP-A-0 051 182 mit dem Titel »Verfahren zur Herstellung von wasserlöslichen Phosphonomethylethern der Cellulose« beschrieben, auf die hier ausdrücklich Bezug genommen wird. Die Herstellung von Mischethern der Cellulose bzw. allgemein die Herstellung von solchen Celluloseethern, die keinen Phosphonomethylsubstituenten tragen, ist seit vielen Jahren, z. T. seit vielen Jahrzehnten bekannt, so daß im Rahmen dieser Erfindung nicht darauf eingegangen werden muß; es wird aber beispielhaft auf Ullmanns Encyklopädie der technischen Chemie, 4. Auflage — 1975, Band 9, Verlag Chemie — Weinheim, Stichwort »Celluloseäther«, Seiten 192 bis 212 verwiesen.

Das Verfahren kann diskontinuierlich oder auch kontinuierlich in einem der von der Celluloseetherchemie her bekannten Aggregate durchgeführt werden; wenn die Temperatur des Reaktionsgemisches so hoch gewählt wird, daß sie über der Siedetemperatur des Lösemittel/$H_2O$-Gemisches liegt, empfiehlt sich die Durchführung des erfindungsgemäßen Verfahrens in einer Druckapparatur; auch bei Einsatz von unter Normalbedingungen (Normaldruck, Raumtemperatur) bereits gasförmigen Reaktionskomponenten wird üblicherweise in einer Druckapparatur gearbeitet (z. B. bei Einsatz von Ethylenoxid als Veretherungsmittel).

Die angegebene Zusammensetzung des Reaktionsgemisches gibt lediglich die Summe der Anteile der zur Reaktion erforderlichen Bestandteile zu Beginn der Veretherungsstufe an, dann liegt z. B. bei separater Alkalisierungsstufe bereits ein Teil der Cellulose und des Alkalimetallhydroxids als Alkalicellulose vor, und durch die Neutralisation von als Säure, als hydrolysierbarem Säurederivat oder als

Hydrogensalz eingesetztem Veretherungsmittel entsteht zusätzliches Wasser. Wenn die Veretherungsmittel beispielsweise in der Form des Mono- oder Disalzes oder eines anderen alkalisch hydrolysierbaren Derivates eingesetzt werden, liegen ihre erforderlichen Einsatzmengen dann natürlich höher als die für die freie Säure einzusetzenden Mengen; d. h. der Begriff »Halogen-methanphosphonat-Ionen« wurde beispielsweise gewählt, um eine einheitliche Berechnungsgrundlage zu haben, und um den Zustand zu charakterisieren, in dem das Veretherungsmittel im alkalischen Medium zu Beginn der Reaktion vorliegt.

Die angegebene Menge an »Hydroxid-Ionen« bezieht sich nur auf die zur Alkalisierung und Veretherung erforderliche Menge, die zur Bildung des Dianions des Veretherungsmittels noch erforderliche Menge an »Hydroxid-Ionen« muß noch dazugerechnet werden.

Die eingesetzte Cellulose ist entweder natürlicher Herkunft, beispielsweise Baumwoll-Linters oder Holz-Zellstoff, oder liegt in regenerierter Form wie als Cellulosehydrat vor; die Teilchengröße der Cellulose sollte vor Beginn der Reaktion möglichst kleiner als etwa 2,5 mm, insbesondere kleiner als etwa 1 mm sein, wobei diese Teilchengröße beispielsweise durch Mahlung der längerfasrig angelieferten Cellulose zu »Pulvern« erreicht werden kann.

Die »Hydroxid-Ionen« werden bevorzugt als Alkalimetallhydroxid — üblicherweise NaOH, aber auch KOH oder LiOH — in fester Form oder in gelöster Form als wäßrige Alkalimetallhydroxid-Lösung eingesetzt, aber auch quartäre Ammoniumbasen können verwendet werden. Als inerte, bevorzugt mit Wasser mischbare organische Lösemittel kommen insbesondere Isopropanol, Aceton, Hexan, Dioxan, tert.-Butanol oder Gemische dieser Lösemittel in Betracht, wobei diese auch bereits mit Wasser vermischt sein können. Sofern das besonders bevorzugte Isopropanol als organisches Lösemittel eingesetzt wird, sollte das Gemisch an Lösemittel/$H_2O$ so eingestellt werden, daß der Wasseranteil 5 bis 30 Gew.-%, insbesondere 10 bis 25 Gew.-% beträgt. Die Wiedergewinnung und Wiederverwendung des besonders bevorzugt eingesetzten Isopropanols ist verhältnismäßig einfach, da oftmals die nach beendeter Veretherung auf mechanischem Wege (z. B. Filtration, Dekantieren oder Abschleudern) von den festen Anteilen abgetrennten flüssigen Bestandteile des Veretherungsgemisches aus salzhaltigen Isopropanol/$H_2O$-Gemischen bestehen, die eine einfache destillative Reinigung zur umweltfreundlichen Rückgewinnung des organischen Lösemittel-Anteils möglich machen.

Anstelle der bevorzugt zur Erzeugung des Substituenten unter b) — d. h. zur Erzeugung der Halogen-methanphosphonat-Ionen — als Veretherungsmittel einzusetzenden Chlor-methanphosphonsäure oder ihrem Mono- oder Dinatriumsalz können auch deren alkalisch hydrolysierbare Derivate (z. B. Säurechloride oder Ester), andere lösliche Salze wie Kalium- oder Ammoniumsalze, oder auch die entsprechenden Brom- oder Jod-methanphosphonsäuren bzw. ihre Derivate oder Salze verwendet werden.

Als Veretherungsmittel zur Erzeugung des oder der Substituenten unter a) werden bevorzugt Methylchlorid, Ethylchlorid, Ethylenoxid, Propylenoxid und/oder Monochloressigsäure oder ein entsprechendes Salz eingesetzt, aber auch Butylenoxid-1,2, Monochlorpropionsäure, Chlorethansulfonsäure, Vinylsulfonsäure, 1-N,N-Diethylamino-2-chlorethan oder 2,3-Epoxypropyl-trimethylammoniumchlorid können eingesetzt werden.

Die Reaktionsprodukte fallen, bezogen auf den Substituenten unter b), in der Regel bei der Reaktion zunächst als dibasische Salze an, die durch Zugabe von Säure, z. B. bei Neutralisation mit Essigsäure bis zum Neutralbereich (pH von 5 bis 8), in die monobasische Salzform oder, z. B. bei überschüssiger Mineralsäurezugabe, in die freie Säure überführbar sind. Aus den monobasischen Salzformen bzw. der freien Säure können durch Zugabe von Basen wie Metallhydroxid oder Ammoniumhydroxid wieder Salze erzeugt werden. Entsprechendes gilt natürlich auch für solche Substituenten unter a), die zunächst in der Salzform anfallen, wie beispielsweise den Carboxymethyl- oder den Sulfoethylsubstituenten.

Bei der praktischen Durchführung des erfindungsgemäßen Verfahrens wird zweckmäßig zuerst die Cellulose im Gemisch aus organischem Lösemittel, Wasser und Alkalimetallhydroxid (oder quartäre Ammoniumbase) alkalisiert, wonach die Zugabe des Veretherungsmittels in einer oder mehreren Stufen (je nach Art des Veretherungsmittels) erfolgt. Es ist aber auch eine Alkalisierung ohne Anwesenheit von organischem Lösemittel möglich, wonach dessen Zugabe erst bei der oder den Veretherungsstufe(n) erfolgt, oder auch eine Zugabe der vollständigen Alkalimetallhydroxidmenge bei der oder den Veretherungsstufe(n), die dann gleichzeitig die Alkalisierungsstufe darstellt, d. h. ein separates Alkalisieren ist dann nicht erforderlich. Alle Stufen, gleichgültig ob als separate Alkalisierungs- oder Veretherungsstufe oder als Kombination beider Stufen durchgeführt, werden in der Regel unter guter Durchmischung gefahren. In der separaten Alkalisierungsstufe wird üblicherweise bei Raumtemperatur (etwa 15 bis 35° C) gearbeitet, die Veretherung verläuft besonders erfolgreich bei einer Temperatur von bis zu 100° C, insbesondere bis zu 90° C. Bei Durchführung der Alkalisierung und Veretherung in einer Stufe kann diese zunächst einige Zeit bei Raumtemperatur gefahren werden, bevor auf die endgültige, zur Veretherung erforderliche Temperatur erhöht wird. Wenn Isopropanol als organisches Lösemittel verwendet wird und das Verfahren ohne Einsatz von Druckaggregaten ablaufen soll, empfiehlt sich ein Arbeiten unterhalb der Siedetemperatur des 87%igen azeotropen Gemisches an Isopropanol/$H_2O$ von 82° C. Bei Einsatz von gasförmigem Veretherungsmittel (wie Ethylenoxid oder Methylchlorid) ist allerdings ein druckloses Arbeiten nicht zweckmäßig. Die erforderlichen Zeiten in der Veretherungsstufe liegen — je nach Reaktionstemperatur — im allgemeinen zwischen 30 min und 8 h. In einer Trennvorrichtung (z. B. einer Zentrifuge) wird das Rohprodukt, bevorzugt nach Zugabe von Säure bis zur Herstellung der monobasischen Salzform, zunächst vom Hauptteil der flüssigen Komponenten befreit und kann gegebenenfalls danach einer Extraktion zur Entfernung anhaftender Salze unterzogen werden; danach wird es getrocknet und kann gegebenenfalls gemahlen, mit weiteren Komponenten vermischt oder auch granuliert werden; diese Aufarbeitungs-, Reinigungs- und Nachbehandlungsmethoden sind die in der Celluloseetherchemie üblichen und benötigen deshalb keine ausführlichere Beschreibung.

Das erfindungsgemäße Verfahren kann aber auch so durchgeführt werden, daß entweder zuerst eine Phosphonomethylcellulose separat hergestellt wird, und dann anstelle von Cellulose in einer oder mehreren weiteren Veretherungsreaktion(en) zum Einsatz kommt, oder daß umgekehrt ein bereits vorgefertigter Celluloseether, der noch veretherbare OH-Gruppen enthält, anstelle von Cellulose phosphonomethyliert wird. Derartige mehrstufige Verfahren zur Mischetherherstellung sind aber in der Regel einem »Eintopfverfahren« in ihrer Wirtschaftlichkeit unterlegen.

Die Verfahrensparameter und die Mengenanteile der eingesetzten bzw. entstehenden Komponenten unterliegen bezüglich des Phosphonomethylsubstituenten u. a. folgenden Rahmenbedingungen:

- Ein zu hoher Wassergehalt im Reaktionsgemisch läßt den Wirkungsgrad der Veretherungsreaktion merklich zurückgehen, er kann jedoch durch entsprechende Erhöhung des mit Wasser mischbaren organischen Lösemittel-Anteils zum Teil ausgeglichen werden.
- Ein zu niedriger Wassergehalt vermindert die Quellung der Alkalicellulose und führt damit zu einer ungleichmäßigen Substitution.
- Ein zu niedriger Alkaligehalt, beispielsweise von weniger als 2 Mol NaOH pro Mol eingesetztem Veretherungsmittel, führt zu sehr niedrigen Substitutionsausbeuten, nach oben sind der Alkalimenge hauptsächlich technische und wirtschaftliche Grenzen gesetzt.
- Größere Mengen an bei der Reaktion entstehenden oder von vornherein anwesenden Fremdelektrolyten wie z. B. NaCl wirken sich ausbeutesenkend aus. Dieser Effekt wird auch durch zu große Mengen an eingesetztem Veretherungsmittel bewirkt, und ist dann nur durch überproportionale Erhöhung des Anteils an Alkalimetallhydroxid in etwa wieder auszugleichen; der unbeschränkten Erhöhung dieser Mengen sind naturgemäß wirtschaftliche Grenzen gesetzt.
- Die Substitutionsausbeute der Phosphonomethylierung, d. h. der tatsächlich erzielte DS-Wert bezogen auf die eingesetzte molare Menge des Veretherungsmittels pro Mol der Anhydro-D-glucose-Einheit der Cellulose, kann im erfindungsgemäßen Verfahren etwa 40% und mehr betragen, bei Einsätzen von weniger als 0,4 Mol an Veretherungsmittel ist die Substitutionsausbeute auf höhere Werte steigerbar.

Die Rahmenbedingungen zur Erzeugung der übrigen Substituenten sind bekannt, es wird auf Ullmanns (weiter oben) verwiesen.

Die nach dem erfindungsgemäßen Verfahren herstellbaren Cellulosemischether können auf den Gebieten der Technik eingesetzt werden, die auch von anderen anionaktiven Cellulosemischethern wie HECMC oder MCMC her bekannt sind.

Die erfindungsgemäßen Produkte und das erfindungsgemäße Verfahren zu ihrer Herstellung sollen anhand der folgenden Cellulosemischether ausführlicher beschrieben werden, es handelt sich dabei um die besonders bevorzugten Produkte HEPMC und CMPMC, die durch Veretherung von Cellulose mit Ethylenoxid oder Monochloressigsäure und Chlor-methanphosphonsäure oder entsprechenden Salzformen hergestellt werden können:

Die Herstellung von HEPMC kann in einem »Eintopfverfahren« erfolgen. Dabei wird das Phosphonomethylierungsmittel, insbesondere in einem Anteil von bis zu 0,5 Mol pro Mol Cellulose, bereits während der Alkalisierungsstufe zugesetzt. Im übrigen werden die für eine HEC-Synthese üblicher Art günstigen Reaktionsparameter eingehalten mit dem Unterschied, daß die Temperatur für mindestens etwa 15 min, insbesondere mindestens etwa 30 min, auf bevorzugt 80 bis 95°C gesteigert wird. Die Reaktion verläuft zweistufig, da bei den zunächst angewandten Veretherungstemperaturen von bis zu etwa 70°C das Phosphonomethylierungsmittel praktisch noch nicht reagiert, so daß die Veretherung mit Ethylenoxid zu HEC bereits weitgehend abgeschlossen ist, bevor durch weitere Temperatursteigerung die Phosphonomethylierung zur HEPMC erfolgt. Der Wassergehalt liegt bei dieser Verfahrensvariante bei mindestens 10 Gew.-%, bezogen auf $H_2O$ und organisches Lösemittel, da für die Synthese klar-löslicher und gleichmäßig substituierter, den Hydroxyethylsubstituenten aufweisender Mischether ein niedrigerer Wassergehalt ungünstig ist. Deshalb wird auch der Anteil des Phosphonomethylierungsmittels eher niedrig gewählt, damit diese Veretherungsstufe auch bei höherem Wassergehalt noch mit befriedigender Ausbeute verläuft. Da die Wasserlöslichkeit des Produkts bereits durch die Hydroxyethylierung gegeben ist, genügen bereits DS-Werte der Phosphonomethylierung ab 0,005, insbesondere ab 0,02, die damit deutlich kleiner als bei reiner wasserlöslicher Phosphonomethylcellulose sind, um der HEPMC anionaktive Eigenschaften zu verleihen. Derartige HEPMC-Produkte mit verhältnismäßig niedrigem Phosphonomethylierungsgrad flocken aus neutraler wäßriger Lösung, z. B. nach Zusatz von $Ca^{2+}$-Ionen im Gegensatz zu reinen Phosphonomethylcellulosen noch nicht aus, aber

stärker vernetzend wirkende Ionen wie $Al^{3+}$-, $Cr^{3+}$- oder $Ti^{4+}$-Ionen können auch auf neutrale HEPMC-Lösungen flockend wirken.

Bei der Synthese der CMPMC ist der gleichzeitige Einsatz beider Veretherungsmittel (z. B. Na-monochloracetat und Dinatrium-chlormethanphosphonat) ungünstig, da die Phosphonomethylierung durch die Carboxymethylierung zurückgedrängt wird. Deshalb ist ein »modifiziertes Eintopfverfahren« zweckmäßig, bei dem zunächst lediglich eine CMC mit verhältnismäßig niedrigem $DS_{CM}$ hergestellt wird; je nach Wert des nachher zu erzielenden Phosphonomethylierungsgrades können bereits DS-Werte ab etwa 0,2 ausreichend sein, die ohne weitere Veretherung zu noch nicht oder nur unvollständig wasserlöslichen CMC-Typen führen würden. Ohne Zwischenaufarbeitung wird die alkalische Reaktionsaufschlämmung daran anschließend phosphonomethyliert.

In den folgenden Beispielen verhalten sich Gew.-Teile zu Vol.-Teilen wie g zu $cm^3$, die Prozentangaben sind auf das Gewicht bezogen. Die angegebenen Viskositätswerte wurden im Höppler-Kugelfallviskosimeter in 2%iger wäßriger Lösung bei 20° C bestimmt.

## Beispiel 1

Es werden 50 Gew.-Teile Buchenzellstoff einer mittleren Teilchengröße von 0,5 mm in einem druckdichten Knetaggregat in 280 Vol.-Teilen (= 225 Gew.-Teilen) 87%igem wäßrigem Isopropanol suspendiert und nach Zugabe von 40 Gew.-Teilen einer 50%igen wäßrigen NaOH-Lösung (= 1,7 Mol pro Mol Cellulose) wird während 60 min unter Rühren bei Raumtemperatur alkalisiert. Die Veretherung wird mit 18 Gew.-Teilen des Mononatriumsalzes der Chlor-methanphosphonsäure (= 0,4 Mol pro Mol Cellulose) und 26 Gew. -Teilen Ethylenoxid (= 2,0 Mol pro Mol Cellulose) durchgeführt, und zwar zunächst während 1 h bei 40° C und danach während 4 h bei 80° C. Es wird abgekühlt, mit Essigsäure gegen Phenolphthalein neutralisiert und die festen Reaktionsprodukte werden von den flüssigen Komponenten abgetrennt. Der feste Rückstand wird mehrmals in 80%igem wäßrigem Isopropanol suspendiert und es wird jeweils wieder eine Trennung der festen von der flüssigen Phase vorgenommen, dies wird so oft wiederholt, bis die flüssige Phase praktisch salzfrei ist. Nach dem Trocknen des festen Reaktionsprodukts bei 70° C wird es zu einem Pulver gemahlen; es werden 62 Gew. -Teile einer HEPMC mit einem $DS_{PM}$ von 0,03 und einem $MS_{HE}$ von 1,36 in der Mono-Na-Salzform erhalten, die in Wasser vollständig und klar löslich ist; die Viskosität beträgt 156 mPa · s, der Nachweis der Anionaktivität verläuft positiv (Fällungsreaktion mit schwach-essigsauer gestellter 1%iger wäßriger Polyethylenimin-Lösung).

## Beispiel 2

Es werden 100 Gew.-Teile Fichtenzellstoff einer mittleren Teilchengröße von 0,5 mm in einem Rührautoklaven in 860 Vol.-Teilen (= 675 Gew.-Teilen) eines 100%igen Isopropanols suspendiert und nach Zugabe einer Lösung von 33 Gew.-Teilen NaOH (= 1,4 Mol) und 15 Gew.-Teilen des Mononatriumsalzes der Chlor-methanphosphonsäure (= 0,2 Mol) in 135 Gew.-Teilen Wasser wird während 30 min unter Rühren bei Raumtemperatur alkalisiert. Zur Veretherung werden noch 116 Gew.-Teile Ethylenoxid (= 4,5 Mol) zugefügt, und es wird für jeweils 30 min zunächst auf 30° C, dann auf 70° C und zuletzt auf 90° C erhitzt. Es wird nach den Angaben des Beispiels 1 aufgearbeitet, wobei 160 Gew.-Teile einer HEPMC mit einem $DS_{PM}$ von 0,075 und einem $MS_{HE}$ von 2,5 in der Mono-Na-Salzform erhalten werden, die in Wasser vollständig und klar löslich ist; die Viskosität beträgt 1180 mPa · s und der Nachweis der Anionaktivität verläuft positiv.

## Beispiel 3

Es werden 50 Gew.-Teile Fichtenzellstoff einer mittleren Teilchengröße von 0,5 mm in 1100 Vol.-Teilen (= 865 Gew.-Teilen) 100%igen Isopropanols suspendiert und nach Zugabe von 205 Gew.-Teilen einer 43,5%igen wäßrigen NaOH-Lösung (= 7,7 Mol) wird während 30 min unter Rühren bei Raumtemperatur alkalisiert. Die Veretherung wird zunächst mit 14 Gew.-Teilen Monochloressigsäure (= 0,5 Mol) bei 45° C während 1 h durchgeführt, wonach 67 Gew.-Teile des Dinatriumsalzes der Chlormethanphosphonsäure (= 1,5 Mol) zugegeben werden und die Veretherung während 4 h bei 80° C fortgesetzt wird. Es wird nach den Angaben des Beispiels 1 aufgearbeitet, aber mit einem 70%igen wäßrigen Isopropanol, wobei 73 Gew.-Teile einer CMPMC mit einem $DS_{CM}$ von 0,35 und einem $DS_{PM}$ von 0,5 in der Na-Salzform bei den Carboxymethylgruppen bzw. in der Mono-Na-Salzform bei den Phosphonomethylgruppen erhalten werden, die in Wasser mit einem Rückstand von etwa 0,3% an unlöslichen Anteilen löslich ist; die Viskosität beträgt 70 mPa · s.

## Patentansprüche

1. Wasserlöslicher Cellulosemischether mit

a) mindestens einem Substituenten aus der Gruppe Alkyl, Hydroxyalkyl, Carboxyalkyl, Sulfoalkyl und Dialkylaminoalkyl eines molaren Substitutionsgrads des Hydroxyalkyls ($MS_{HAlk}$) von 0,5 bis 6,0 und/oder eines Substitutionsgrads des oder der übrige(n) a)-Substituenten (DS) von 0,05 bis 2,95 und
b) einem Phosphonomethylsubstituenten eines Substitutionsgrads ($DS_{PM}$) von 0,005 bis 0,8.

2. Cellulosemischether nach Anspruch 1, dadurch gekennzeichnet, daß er unter a) einen Methyl-, Ethyl-, Hydroxyethyl-, Hydroxypropyl- und/oder Carboxymethyl-Substituenten aufweist.

3. Cellulosemischether nach Anspruch 1 oder 2, dadurch gekennzeichnet, daß er

a) einen Hydroxyethyl-Substituenten mit einem $MS_{HE}$ von 0,8 bis 5,0 oder einen Carboxymethyl-Substituenten mit einem $DS_{CM}$ von 0,2 bis 1,5 und
b) einen Phosphonomethyl-Substituenten mit einem $DS_{PM}$ von 0,01 bis 0,6

aufweist.

4. Verfahren zur Herstellung eines wasserlöslichen Cellulosemischethers nach einem der Ansprüche 1 bis 3, dadurch gekennzeichnet, daß man pro Mol Cellulose
0,1 bis 25 Mol des oder der Veretherungsmittel zur Erzeugung der Substituenten unter a),
0,05 bis 2,0 Mol Halogen-methanphosphonat-Ionen als Veretherungsmittel zur Erzeugung des Substituenten unter b), und
0,8 bis 12,0 Mol Hydroxid-Ionen

zur Reaktion bringt, wobei je nach Art des Veretherungsmittels zur Erzeugung des Substituenten unter a) bis zu 30 Gew.-Teile, pro Gew.-Teil Cellulose, eines Gemisches aus einem inerten, bevorzugt mit $H_2O$ mischbaren organischen Lösemittel und $H_2O$, bei einem Wasseranteil von 3 bis 40 Gew.-%, zugegen sind.

5. Verfahren nach Anspruch 4, dadurch gekennzeichnet, daß man pro Mol Cellulose

0,3 bis 8 Mol des oder der Veretherungsmittel zur Erzeugung der Substituenten unter a),
0,1 bis 1,0 Mol Halogen-methanphosphonat-Ionen als Veretherungsmittel zur Erzeugung des Substituenten unter b), und
1,0 bis 6,0 Mol Hydroxid-Ionen

in 5 bis 15 Gew.-Teilen, pro Gew.-Teil Cellulose, eines Gemisches aus einem inerten, bevorzugt mit $H_2O$ mischbaren organischen Lösemittel und $H_2O$, wobei der Wasseranteil 10 bis 30 Gew.-% beträgt, zur Reaktion bringt.

6. Verfahren nach Anspruch 4 oder 5, dadurch gekennzeichnet, daß als organisches Lösemittel Isopropanol verwendet wird.

7. Verfahren nach einem der Ansprüche 4 bis 6, dadurch gekennzeichnet, daß als Veretherungsmittel zur Erzeugung des oder der Substituenten unter a) Methylchlorid, Ethylchlorid, Ethylenoxid, Propylenoxid und/oder Monochloressigsäure oder ein entsprechendes Salz und als Veretherungsmittel zur Erzeugung des Substituenten unter b) Chlor-methanphosphonsäure oder ein entsprechendes Salz verwendet werden.

8. Verfahren nach einem der Ansprüche 4 bis 6, dadurch gekennzeichnet, daß als Veretherungsmittel Ethylenoxid oder Monochloressigsäure und Chlor-methanphosphonsäure oder entsprechende Salzformen verwendet werden.

9. Verfahren nach einem der Ansprüche 4 bis 8, dadurch gekennzeichnet, daß die Veretherungsreaktion bei einer Temperatur von bis zu 100° C durchgeführt wird.

## Claims

1. A water-soluble cellulose mixed ether which contains

a) at least one substituent from the group comprising alkyl, hydroxyalkyl, carboxyalkyl, sulfoalkyl and dialkylaminoalkyl having a molar degree of substitution of said hydroxyalkyl ($MS_{HAlk}$) from 0.5 to 6.0 and/or a degree of substitution of said rest of substituents a) (DS) from 0.05 to 2.95, and
b) a phosphonomethyl substituent having a degree of substitution ($DS_{PM}$) from 0.005 to 0.8.

2. A cellulose mixed ether as claimed in claim 1, which contains under a) a mehtyl, ethyl, hydroxyethyl, hydroxpropyl and/or carboxymethyl substituent.

3. A cellulose mixed ether as claimed in claim 1 or claim 2, which contains

a) a hydroxyethyl substituent having an $MS_{HE}$ from 0.8 to 5.0 or a carboxymethyl substituent having a $DS_{CM}$ from 0.2 to 1.5 and
b) a phosphonomethyl substituent having a $DS_{PM}$ from 0.01 to 0.6.

4. A process for preparing a water-soluble cellulose mixed ether as claimed in any of claims 1 to 3, in which, per mole of the cellulose,

from 0.1 to 25 moles of the etherifying agent(s) for producing the substituent(s) under a),
from 0.05 to 2.0 moles of halogenomethane phosphonate ions as the etherifying agent for producing the substituent under b) and
from 0.8 to 12 moles of hydroxide ions

are caused to react, the reaction mixture comprising — depending on the kind of etherifying agent(s) used to produce the substituent(s) under a) — up to 30 parts by weight, per part by weight of the cellulose, of a mixture which is composed of an inert, preferably water-miscible organic solvent and $H_2O$ and in which the proportion of water ranges from 3 to 40 percent by weight.

5. A process as claimed in claim 4, in which, per mole of the cellulose,

from 0.3 to 8 moles of the etherifying agent(s) for producing the substituent(s) under a),
from 0.1 to 1.0 mole of halogenomethane phosphonate ions as the etherifying agent for producing the substituent under b) and
from 1.0 to 6.0 moles of hydroxide ions

are caused to react in 5 to 15 parts by weight, per part by weight of the cellulose, of a mixture which is composed of an inert, preferably water-miscible organic solvent and $H_2O$ and in which the proportion of water ranges from 10 to 30 percent by weight.

6. A process as claimed in claim 4 or claim 5, in which the organic solvent used is isopropanol.

7. A process as claimed in any of claims 4 to 6, in which as the etherifying agent(s) for producing the substituent(s) under a) methyl chloride, ethyl chloride, ethylene oxide, propylene oxide and/or monochloroacetic acid or a corresponding salt and as the etherifying agent for producing the substituent under b) chloromethane phosphonic acid or a corresponding salt are used.

8. A process as claimed in any of claims 4 to 6, in which the etherifying agents used are ethylene oxide or monochloroacetic acid and chloromethane phosphonic acid or corresponding salt forms.

9. A process as claimed in any of claims 4 to 8, in which the etherification reaction is carried out at a temperature up to 100° C.

**Revendications**

1. Ether mixte de cellulose soluble dans l'eau avec

a) au moins un substituant choisi parmi les groupes alcoyle, hydroxyalcoyle, carboxyalcoyle, sulfoalcoyle et dialcoylaminoalcoyle d'un degré de substitution molaire du groupe hydroxyalcoyle ($MS_{HAlk}$) de 0,5 à 6,0 et/ou d'un degré de substitution du ou des substituant(s) a) (DS) de 0,05 à 2,95; et
b) un substituant phosphonométhyle d'un degré de substitution ($DS_{PM}$) de 0,005 à 0,8.

2. Ether mixte de cellulose selon la revendication 1, caractérisé en ce qu'il présente en a) un substituant méthyle, éthyle, hydroxyéthyle, hydroxypropyle et/ou carboxyméthyle.

3. Ether mixte de cellulose selon l'une des revendications 1 et 2, caractérisé en ce qu'il présente en

a) un substituant hydroxyéthyle avec un $MS_{HE}$ de 0,8 à 5,0 ou un substituant carboxyméthyle avec un $DS_{CM}$ de 0,2 à 1,5 et en
b) un substituant phosphonométhyle avec un $DS_{PM}$ de 0,01 à 0,6.

4. Procédé pour la préparation d'un éther mixte de cellulose soluble dans l'eau selon l'une quelconque des revendications 1 à 3, caractérisé en ce que, par mole de cellulose, on fait réagir:
de 0,1 à 25 moles du ou des agent(s) d'éthérification pour l'obtention du substituant selon a),
de 0,05 à 2,0 moles d'ions halogéno-méthanephosphonate comme agent d'éthérification pour l'obtention du substituant selon b), et
de 0,8 à 12,0 moles d'ions hydroxyle,

le melange de réaction comprenant, selon le type de l'agent d'éthérification utilisé pour l'obtention du substituant selon a), jusqu'à 30 parties en poids, par partie en poids de cellulose, d'un mélange d'un solvant organique inerte, de préferénce miscible à l'eau et de $H_2O$, la proportion d'eau atteignant de 3 à 40% en poids.

5. Procédé selon la revendication 4, caractérisé en ce que par mole de cellulose, on fait réagir

| | |
|---|---|
| de 0,3 à 8 moles | du ou des agent(s) d'éthérification pour l'obtention du substituant selon a), |
| de 0,1 à 1,0 mole | d'ions halogéno-méthanephosphonate comme agent d'éthérification pour l'obtention du substituant selon b), et |
| de 1,0 à 6,0 moles | d'ions hydroxyle |

dans 5 à 15 parties en poids, par partie en poids de cellulose, d'un mélange d'un solvant organique, inerte, de préférence miscible à l'eau et d'eau, la proportion d'eau atteignant de 10 à 30% en poids.

6. Procédé selon l'une des revendications 4 et 5, caractérisé en ce que comme solvant organique, on utilise l'isopropanol.

7. Procédé selon l'une quelconque des revendications 4 à 6, caractérisé en ce que comme agent d'éthérification pour l'obtention du ou des substituant(s) selon a), on utilise le chlorure de méthyle, le chlorure d'éthyle, l'oxyde d'éthylène, l'oxyde de propylène et/ou l'acide monochloracétique ou un sel correspondant, et comme agent d'éthérification pour l'obtention du substituant selon b) on utilise l'acide chloro-méthanephosphonique ou un sel correspondant.

8. Procédé selon l'une quelconque des revendications 4 à 6, caractérisé en ce que comme agent d'éthérification on utilise l'oxyde d'éthylène ou l'acide monochloracéthique et l'acide chlorométhanephosphonique ou les sels correspondants.

9. Procédé selon l'une quelconque des revendications 4 à 8, caractérisé en ce que la réaction d'éthérification est conduite à une température pouvant atteindre 100°C au maximum.